# EUROPEAN PATENT SPECIFICATION

(11) **EP 4 322 304 B1**
(45) Date of publication and mention of the grant of the patent: **04.03.2026**
(21) Application number: 23756536.1
(22) Date of filing: 20.01.2023
(51) Int. Cl.: H01M 50/35, H01M 50/204, H01M 50/333, H01M 50/358, H01M 50/308, H01M 50/30, H01M 50/211, H01M 50/209, H01M 50/271, H01M 50/367

(54) **BATTERY MODULE IN WHICH WIDTH OF GAS DISCHARGE PATH IS VARIABLY ADJUSTED ACCORDING TO PRESSURE OF VENTING GAS, AND BATTERY PACK INCLUDING THE BATTERY MODULE**
BATTERIEMODUL MIT VARIABLER BREITE DES GASENTLADUNGSDURCHGANGS JE NACH DRUCK DES ENTLÜFTUNGSGASES UND BATTERIEPACK DAMIT
MODULE DE BATTERIE DANS LEQUEL LA LARGEUR D'UN PASSAGE DE DÉCHARGE DE GAZ EST RÉGLÉE DE MANIÈRE VARIABLE EN FONCTION DE LA PRESSION DE GAZ DE VENTILATION, ET BLOC-BATTERIE LE COMPRENANT

(30) Priority: 17.02.2022 KR 20220020960
(43) Date of publication of application: 14.02.2024
(73) Proprietor: LG Energy Solution, Ltd., Seoul 07335 (KR)
(72) Inventor: PARK, Ju-Hun, Daejeon 34122 (KR); JUNG, Hye-Mi, Daejeon 34122 (KR); LEE, Young-Ro, Daejeon 34122 (KR)
(74) Representative: Plasseraud IP
(86) International application number: PCT/KR2023/001024
(87) International publication number: WO 2023/158123

(56) References cited:
- CN-U- 214 013 083
- JP-A- 2015 018 706
- JP-B2- 6 057 961
- JP-B2- 6 574 987
- KR-A- 20170 090 261
- KR-A- 20210 082 086
- KR-A- 20210 082 086
- KR-A- 20220 008 602
- KR-A- 20220 018 796
- KR-B1- 102 307 763
- US-A1- 2017 244 082

## Description

### TECHNICAL FIELD

The present disclosure relates to a battery module, and more particularly, to a battery module in which a width of a gas discharge path may be greatly increased according to the amount of gas generated when there is internal ignition of the battery module, and a battery pack including the battery module.

The present application claims priority to Korean Patent Application No. 10-2022-0020960 filed on February 17, 2022 in the Republic of Korea.

### BACKGROUND ART

Because secondary batteries may radically reduce the use of fossil fuel and do not generate any by-products that come with energy consumption, the secondary batteries are gaining attention as a new alternative energy source for improving eco-friendliness and energy efficiency.

Accordingly, the application of secondary batteries to various devices is increasing. For example, secondary batteries are widely used as energy sources for wireless mobile devices or wearable devices, which are small multifunctional products, and are also used as energy sources for energy storage systems (ESSs) or electric vehicles and hybrid electric vehicles that are suggested as alternatives to existing gasoline vehicles and diesel vehicles.

An operating voltage per lithium secondary battery that has recently been widely used is about 2.5 V to about 4.5 V. Accordingly, an electric vehicle or an ESS requiring high capacity and high power includes a battery module in which a plurality of lithium secondary batteries are connected in series and/or in parallel and a battery pack in which a plurality of battery modules are connected in series and/or in parallel, and uses them as an energy source.

According to the power or capacity of a battery pack required for an electric vehicle, the number of lithium secondary batteries included in one battery module or the number of battery modules included in one battery pack may increase.

However, in a battery pack including such a large number of battery modules, when a fire occurs in a battery module, damage inevitably increases.

For example, when an event such as a short-circuit between lithium secondary batteries or an abnormal temperature rise occurs in some battery modules, a large amount of venting gas may be generated from the lithium secondary batteries, and as degradation gets worse, a flame and a high-temperature particles including an electrode active material and aluminum particles may be generated, and the flame and the high-temperature particles may be ejected to the outside of the battery modules together with the venting gas. The ejected flame and high-temperature spark may cause thermal damage to other battery modules adjacent to the ignited battery modules to promote ignition of the other battery modules.

Accordingly, in order to prevent or delay the risk of chain ignition or explosion of battery modules as much as possible, it is necessary to design a battery module so that internal pressure of the battery module does not continuously increase by preventing a flame and high-temperature spark from a first ignited battery module from being discharged from the inside of the battery module to the outside and by allowing only gas to be discharged to the outside.

However, when a width of a gas discharge path is increased to rapidly discharge a large amount of gas, oxygen may be easily introduced inward from the outside of a battery module, and the introduced oxygen may contact a flame or high-temperature spark in the battery module to promote ignition of the battery module more rapidly and greatly.

Accordingly, when a large amount of venting gas is generated in a battery module, a method of discharging the large amount of venting gas while reducing introduction of oxygen is required.

Document JP6057961 discloses a non-aqueous electrolyte cell having a safety valve of the related art.

Document JP2015018706 discloses a power storage device module in which the electrolyte, ejected upon actuation of a pressure release valve, is prevented from having an impact on a power storage device where the pressure release valve has not been actuated.

### DISCLOSURE

### Technical Problem

The present disclosure is designed to solve the problems of the related art, and therefore the present disclosure is directed to providing a battery module in which, when a large amount of venting gas is generated in a battery module, the large amount of venting gas may be effectively discharged to the outside while reducing introduction of oxygen, and a battery pack including the battery module.

However, technical problems to be solved by the present disclosure are not limited to the above-described technical problems and one of ordinary skill in the art will understand other technical problems from the following description.

### Technical Solution

In an aspect of the present disclosure, there is provided a battery module as defined in the appended claims.

In another aspect of the present disclosure, there is provided a battery pack including the battery module according to the present disclosure.

### Advantageous Effects

According to an aspect of the present disclosure, there may be provided a battery module in which, when a large amount of venting gas is generated in the battery module, the large amount of venting gas may be effectively discharged to the outside while reducing introduction of oxygen.

In more detail, in the battery module according to the present disclosure, a plate-shaped gas venting panel including a gas discharge path is coupled to an outer side of a module case. At normal times, the gas discharge path is closed to prevent introduction of oxygen, and when an event occurs, the gas discharge path is opened to discharge venting gas to the outside. In particular, because the gas discharge path is configured so that a width of the gas discharge path is variably increased according to the intensity of pressure of gas, a large amount of gas that is rapidly increasing may be discharged more smoothly.

The effects of the present disclosure are not limited to the effects mentioned above, and other effects not mentioned will be clearly understood by one of ordinary skill in the art from the specification and the attached drawings.

### DESCRIPTION OF DRAWINGS

FIG. 1 is a schematic perspective view illustrating a battery module according to a first embodiment of the present disclosure.
FIG. 2 is an exploded perspective view illustrating main elements of the battery module of FIG. 1.
FIG. 3 is a view illustrating a gas venting panel separated from the battery module of FIG. 1.
FIG. 4 is a perspective view schematically illustrating a configuration of the gas venting panel according to the first embodiment of the present disclosure.
FIG. 5 is a view illustrating a gas venting panel when pressure of gas is low.
FIG. 6 is a view illustrating a gas venting panel when pressure of gas is higher than that of FIG. 5.
FIG. 7 is a perspective view, which is a modified example of the first embodiment of the present disclosure, schematically illustrating a battery module in which a gas venting panel is applied to an upper end of a module case.
FIG. 8 is a view illustrating the gas venting panel separated from the battery module of FIG. 7.
FIGS. 9a and 9b are views illustrating a gas venting panel not representing the invention, respectively before and after gas is generated.
FIGS. 10a and 10b are views illustrating a gas venting panel not representing the invention, respectively before and after gas is generated.
FIGS. 11a and 11b are views illustrating a gas venting panel not representing the invention, respectively before and after gas is generated.
FIGS. 12a and 12b are views illustrating a gas venting panel according to an embodiment of the present disclosure respectively before and after gas is generated.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope as defined by the claims.

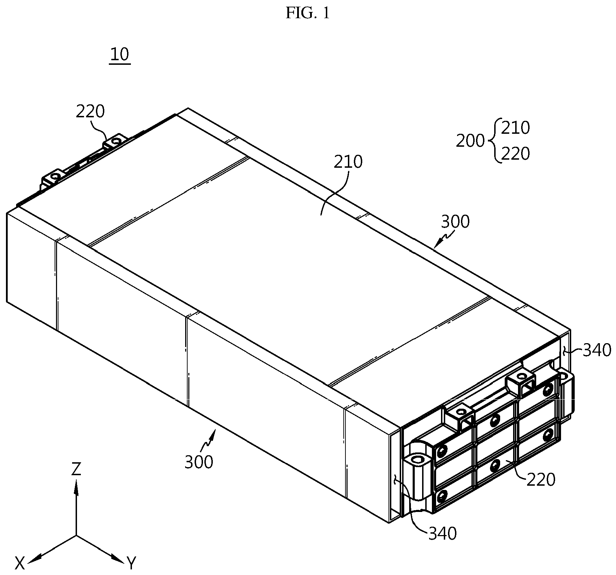

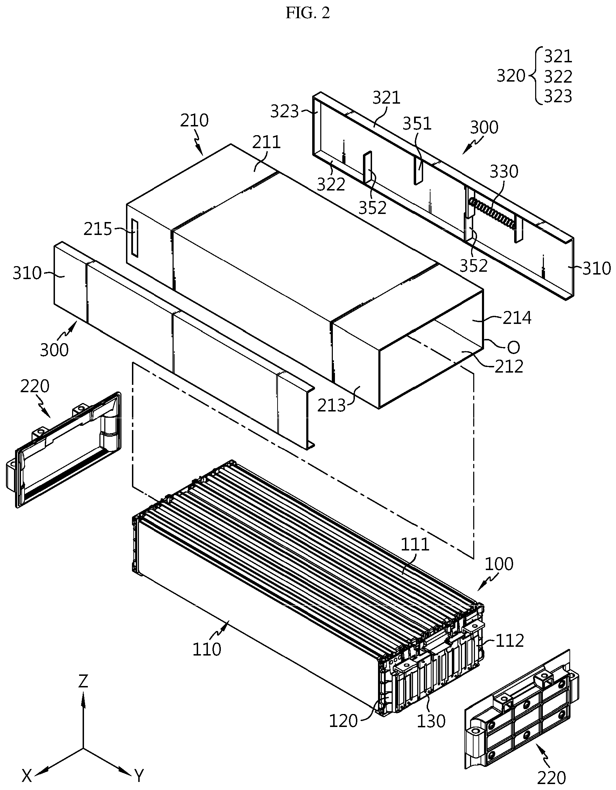

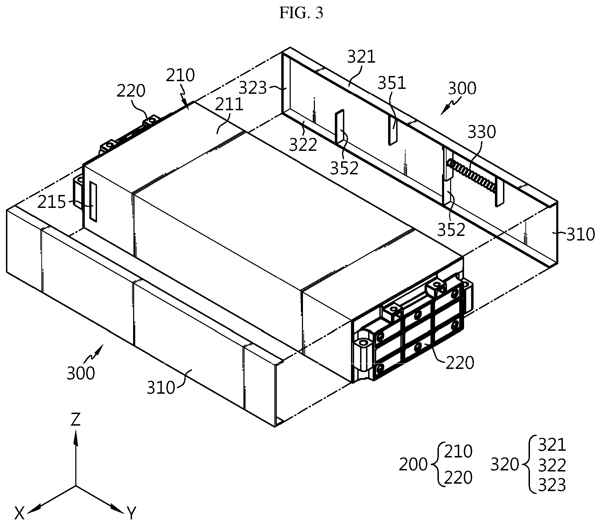

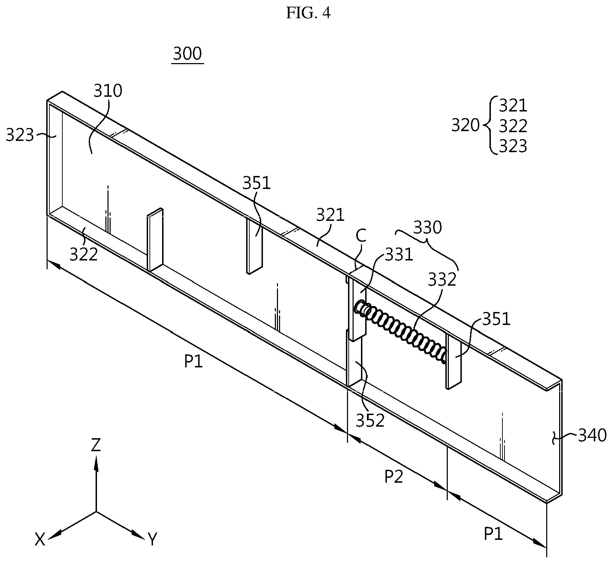

FIG. 1 is a schematic perspective view illustrating a battery module according to a first embodiment of the present disclosure. FIG. 2 is an exploded perspective view illustrating main elements of the battery module of FIG. 1. FIG. 3 is a view illustrating a gas venting panel separated from the battery module of FIG. 1. FIG. 4 is a perspective view schematically illustrating the gas venting panel according to the first embodiment of the present disclosure.

Referring to FIGS. 1 to 4, a battery module 10 includes a cell assembly 100 including battery cells 111, a module case 200 in which the cell assembly 100 is accommodated and protected, and a gas venting panel 300 configured to discharge gas when there is ignition of the battery cells 111.

When a large amount of gas is generated in the battery module 10 and is not appropriately discharged to the outside, the battery module 10 may explode due to high pressure. For example, in general, a battery pack for an electric vehicle includes a plurality of battery modules 10. When thermal runaway occurs in some of the battery cells 111 included in a certain battery module 10 and thus a large amount of gas is generated, the battery module 10 may explode due to a rapid increase in pressure. When the battery module 10 explodes, other neighboring battery modules 10 may also suffer significant thermal damage, resulting in a chain explosion or a fire that rapidly and greatly expands.

Accordingly, the battery module 10 according to the present disclosure includes the gas venting panel 300 as a means for reducing internal pressure of the battery module 10 by discharging a large amount of gas to the outside in a situation where thermal runaway occurs in the battery cells 111.

In particular, the gas venting panel 300 of the present disclosure is configured to make it difficult for a flame or high-temperature spark in the battery module 10 to escape to the outside and make it difficult for air (oxygen) to enter the battery module 10 and contact the flame or high-temperature spark. (Here, the spark refers to an electrode active material or aluminum particles separated from an electrode when there is ignition of the battery cell 111.)

Main elements of the battery module 10 according to the present disclosure will be described in detail.

First, as shown in FIG. 2, the cell assembly 100 of the battery module 10 according to the first embodiment of the present disclosure includes a cell stack 110, a bus bar frame 120, and a plurality of bus bars 130.

The cell stack 110 is an assembly of battery cells 111 formed by stacking a plurality of battery cells 111. That is, the cell stack 110 may include a plurality of pouch-type battery cells 111 stacked in one direction (X direction) with wide surfaces erected.

The pouch-type battery cell 111 includes an electrode assembly, a pouch case in which the electrode assembly is accommodated, and a pair of electrode leads 112 connected to the electrode assembly and drawn out of the pouch case to function as electrode terminals. The pair of electrode leads 112 are drawn out in a longitudinal direction (±Y direction) of the battery cell 111 to be opposite to each other.

When necessary, the pouch-type battery cell 111 may be formed so that the electrode lead 112 is located only at an end in the Y axis direction, for example, at an end in the +Y axis direction. The present disclosure is not limited by a specific type or shape of the battery cell 111, and any of various battery cells 111 known at the time of filing the present application may be used to constitute the cell stack 110 of the present disclosure.

The bus bar frame 120 may be injection molded by using an electrically insulating material, and is provided in a plate shape of a size sufficient to cover a front side (+Y direction) or a rear side (-Y direction) of the cell stack 110.

Also, the bus bar frame 120 includes a plurality of lead slots through which the electrode leads 112 of the pouch-type battery cells 111 may pass in the +Y axis direction or the -Y axis direction. The plurality of lead slots may be provided in a stacking direction (X direction) of the battery cells 111.

The bus bar frame 120 of the present embodiment may be configured to fix a plurality of bus bars 130, and although not shown, additional components such as a connector or another printed circuit board (PCB) may be provided in a space over the bus bars 130 and the bus bar frame 120 may include a support plate for supporting and fixing the additional components.

The plurality of bus bars 130 may be formed of an electrically conductive material, for example, a metal such as copper, aluminum, or nickel, and the electrode leads 112 of a pre-determined number of battery cells 111 are welded, fixed, and electrically connected to a surface of a pre-determined bus bar 130. The bus bars 130 of the present embodiment are provided in a rectangular bar shape with a central hole through which the electrode lead 112 may pass, and are located on the bus bar frame 120 so that the central hole communicates with the lead slot of the bus bar frame 120.

Also, the bus bars 130 are arranged on the bus bar frame 120 in the same direction as the stacking direction of the battery cells 111. The electrode leads 112 of certain battery cells 111 may be stacked, may pass through the bus bar frame 120 in a front-back direction through a lead slot at a corresponding position, and may be drawn out in front of the bus bar 130, and the drawn-out portions may be fixedly welded to a surface of the bus bar 130.

The module case 200 that is an element for protecting the cell assembly 100 from external impact or the like may be preferably formed of a material having excellent mechanical strength. The module case 200 according to the present embodiment includes a case body 210 and a case cover 220, as shown in FIGS. 1 and 2.

The case body 210 may include an upper plate 211, a lower plate 212, both side plates 213, 214, and an open end O with both ends open in a longitudinal direction, may be formed in a quadrangular tube shape with an empty inside, and may be provided so that the cell assembly 100 is inserted into the case body 210 in the longitudinal direction (Y direction). That is, the case body 210 may be configured so that the cell assembly 100 is inserted into the case body 210 in a sliding manner or press-fitting manner.

The battery module 10 to which the case body 210 is applied may be configured so that there is almost no gap between the upper plate 211 of the case body 210 and an upper end of the cell stack 110, there is almost no gap between the lower plate of the case body 210 and a lower end of the cell stack 110, and there is almost no gap between the both side plates 213, 214 of the case body 210 and both sides of the cell stack 110.

The case cover 220 may be coupled to the case body 210 to shield a portion where the electrode leads 112 and the bus bars 130 are electrically connected to each other and cover the open end O of the case body 210. For example, because an inner side of the case cover 220 is formed of an insulating material and an outer side of the case cover 220 is formed of a metal material, the case cover 220 may be welded to the open end O of the case body 210.

Referring back to FIGS. 2 and 3, the case body 210 includes a gas venting hole 215. The gas venting hole 215 is a portion through which gas escapes from the module case 200 when there is internal ignition of the battery module 10.

When the gas venting panel 300 is mounted, the gas venting hole 215 is provided opposite to an outlet 340 with respect to a closed point C of the gas venting panel. Preferably, it is effective that the gas venting hole 215 is located as far as possible from the outlet 340 of the gas venting panel 300 in order to prevent external leakage of a flame or spark.

Accordingly, as shown in FIG. 3, one gas venting hole 215 may be provided at an end of each of the both side plates 213, 214 of the case body 210, and is covered by the gas venting panel 300 not to be exposed to the outside. As such, because the gas venting hole 215 is covered by the gas venting panel 300, when gas is discharged from the gas venting hole 215, external exposure of a flame or spark may be prevented.

That is, as described below in detail, because the gas venting panel 300 covers only an outer side of the gas venting hole 215 and is configured to allow only gas to easily escape, the movement of a flame or high-temperature spark is limited. Although not shown, a metal mesh may be additionally applied to the gas venting hole 215 to prevent a flame or large particles from easily passing through the gas venting hole 215.

The gas venting panel 300 is provided in a substantially plate shape, covers the gas venting hole 215, is coupled to an outer side of the module case 200, and includes a gas discharge path P therein, in order to guide and discharge gas generated in the battery cells 111 to the outside along a pre-determined path and prevent a flame or high-temperature spark from being easily discharged to the outside.

In particular, the gas venting panel 300 according to the present disclosure includes a passage width adjusting unit 330 for variably adjusting a width of the gas discharge path P. The passage width adjusting unit 330 may be configured to, when gas is generated in the battery module 10, discharge the gas to the outside while reducing introduction of oxygen.

That is, the passage width adjusting unit 330 may be an element responsible for discharging a large amount of gas to the outside of the battery module 10 while reducing contact between an ignition source in the battery module and oxygen outside the battery module from among three elements of fire (combustible, ignition source, and oxygen).

A configuration of the gas venting panel 300 according to the present disclosure will be described in more detail.

As shown in FIGS. 3 and 4, the gas venting panel 300 according to the present embodiment includes a cover plate 310, an edge portion 320, the passage width adjusting unit 330, and the outlet 340.

The cover plate 310 may be a plate-shaped element formed of a metal material and having an area corresponding to one surface of the module case 200 in which the gas venting hole 215 is formed.

When the gas venting panel is attached to the module case, the cover plate is spaced apart from the surface of the module case 200 in which the gas venting hole 215 is formed by a height (X direction) of the edge portion 320.

The edge portion 320 may be provided along a circumference of the cover plate 310, and may surround a space between the cover plate 310 and the surface of the module case 200 except for the outlet 340.

The edge portion 320 may include a first edge portion 321 extending in the longitudinal direction of the module case 200, a second edge portion 322 facing the first edge portion 321 and extending in the longitudinal direction of the module case 200, and a third edge portion 323 extending to cross the first edge portion 321 and including both ends respectively connected to an end of the first edge portion 321 and an end of the second edge portion 322.

The gas venting panel 300 may be airtightly fixedly coupled to an outer side of the module case 200 by welding the first to third edge portions 321, 322, 323 to edges of the surface of the module case 200, and an inner space, that is, the gas discharge path P, communicating with the gas venting hole 215 and surrounded by one surface of the module case 200, the cover plate 310, and the edge portion 320 may be provided.

Also, the outlet 340 may be provided at an end of the gas venting panel 300 facing the third edge portion 323 by reducing or omitting the edge portion 320. The outlet 340 has an open structure so that gas is discharged to the outside when the gas venting panel 300 is coupled to the surface of the module case 200.

Accordingly, according to this configuration, when there is internal ignition of the battery module 10, gas may come out of the gas venting hole 215 of the module case 200 (at the end in the -Y direction), may enter the gas venting panel 300, may move from the third edge portion 323 toward the outlet 340 (+Y direction), and may be discharged to the outside.

Also, the gas discharge path P in the gas venting panel 300 may be configured to guide a gas flow in a zigzag or meandering manner. Because a zigzag or meandering passage makes it difficult for a flame or spark to move and generates a lot of vortices when gas passes, the flame or spark may frequently collide with the module case 200 or the gas venting panel 300 due to the vortices, and in this case, heat exchange may occur, thereby extinguishing the flame and greatly lowering a temperature of the spark.

As an example of forming the zigzag or meandering passage, the gas venting panel 300 according to the present embodiment includes a first protruding plate 351 and a second protruding plate 352 in the gas discharge path P.

As shown in FIG. 4, the first protruding late 351 may have a height corresponding to a height (X direction) of the edge portion 320, may have a length shorter than a shortest straight line distance between the first edge portion 321 and the second edge portion 322, and may protrude from the first edge portion 321 toward the second edge portion 322.

The second protruding plate 352 may have a height corresponding to a height (X direction) of the edge portion 320, may have a length shorter than a shortest straight line distance between the second edge portion 322 and the first edge portion 321, and may protrude from the second edge portion 322 toward the first edge portion 321. A plurality of first protruding plates 351 may be provided to be spaced apart from each other by a certain interval in a longitudinal direction (Y direction) of the gas venting panel 300, and a plurality of second protruding plates 352 may be provided to be spaced apart from each other by a certain interval in the longitudinal direction (Y direction) of the gas venting panel 300. The first protruding plates 351 and the second protruding plates 352 may be alternately arranged, or may be provided not to contact each other even when they are located at the same position in the Y direction.

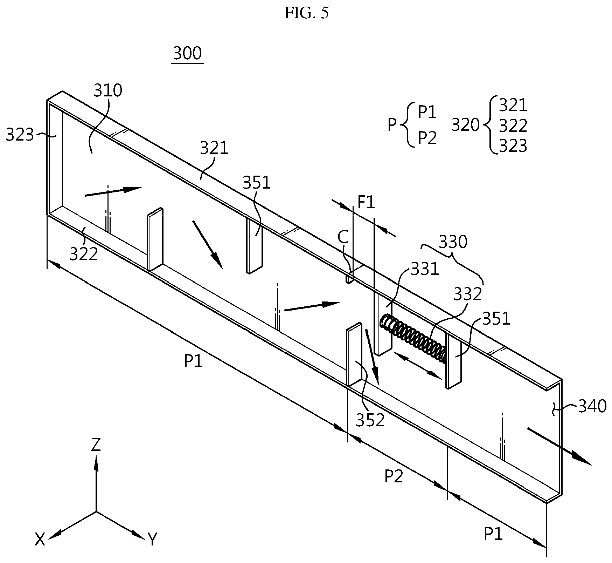

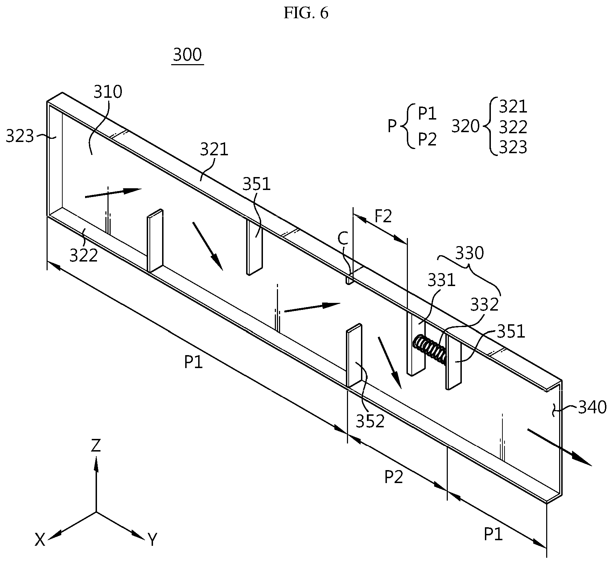

According to the first protruding plate 351 and the second protruding plate 352, as shown in FIGS. 5 and 6, a gas flow from an end of the gas venting panel 300 to the outlet 340 may be guided in a zigzag or meandering manner.

The gas discharge path P according to the present embodiment includes a fixed path section P1 and a variable path section P2, as shown in FIGS. 4 to 6.

The fixed path section P1 refers to an section in which a width of a passage through which gas may move is not changed, and the variable path section P2 refers to an section in which a width of a passage is variably changed by the passage width adjusting unit 330.

The passage width adjusting unit 330 may be configured to close the variable path section P2 at normal times and to open the variable path section P2 when gas is generated in order to expand a passage as pressure of gas increases.

In detail, the passage width adjusting unit 330 according to the present embodiment includes a passage blocking member 331 initially located at the closed point C in the variable path section P2 and provided to close the variable path section P2, and a position adjusting member 332 configured to move the passage blocking member 331 away from the closed point C in a direction in which a width of a passage of the variable path section P2 can expand when gas is generated.

For example, as shown in FIG. 4, the passage blocking member 331 may be provided in a plate shape that is initially located at the closed point C, which is a point in the variable path section P2, and may close the variable path section P2. According to the passage blocking member 331, air (oxygen) outside the battery module 10 is not introduced into the gas venting hole 215 through the gas venting panel 300 at normal times, that is, when gas is not generated. Accordingly, contact between an ignition source and air (oxygen) may be prevented at the initial stage of ignition.

The position adjusting member 332 may be implemented as a coil spring. Although a shape of a coil spring is briefly shown in FIG. 4 for convenience of drawing, the number, shape, and material of the coil spring may be selected to have a spring constant enough to appropriately reduce a length in proportion to pressure of gas.

One side of the coil spring may be fixed in the gas venting panel 300, and the other side may be fixedly coupled to the passage blocking member 331.

For example, as shown in an embodiment of FIG. 4, one end of the coil spring may be coupled to the first protruding plate 351 located at a certain interval from the closed point C toward the outlet 340 (-Y direction), and the other end of the coil spring may be coupled to a rear surface of the passage blocking member 331.

A stopper that is on the same line as the second protruding plate 352 in a Z direction and protrudes relatively short from the first edge portion 321 may be provided at the closed point C.

Because a front edge portion of the passage blocking member 331 contacts the second protruding plate 352 and the stopper in a state where an elastic force of the coil spring is applied in the -Y direction, a passage between the second protruding plate 352 and the stopper is blocked by the passage blocking member 331. Accordingly, at normal times, because the passage blocking member 331 is attached to the second protruding plate 352 and the stopper and an elastic force of the coil spring is continuously applied to push the passage blocking member 331 (in the -Y direction), the variable path section P2 is maintained in a closed state.

However, when there is internal ignition of the battery module 10, and gas comes out of the gas venting hole 215 and is introduced into the venting panel 300, pressure of the gas is applied to the passage blocking member 331 (in the +Y direction). In this case, when the pressure of the gas is greater than the elastic force of the coil spring, the coil spring is compressed and the passage blocking member 331 moves (in the +Y direction) to open the variable path section P2. Then, as marked by arrows in FIGS. 5 and 6, the gas may move along the gas discharge path P and may be discharged to the outside through the outlet 340.

In more detail, an embodiment of FIG. 5 may correspond to a state of the gas venting panel 300 when ignition of the battery module 10 starts, and an embodiment of FIG. 6 may correspond to a state of the gas venting panel 300 when ignition of the battery module10 intensifies and a large amount of gas is generated.

At the initial stage when ignition of the battery module 10 starts, the amount of gas generated in the battery module 10 is not large. Accordingly, rather than reducing internal pressure of the battery module 10, it is more important to prevent external air (oxygen) from being introduced into the battery module 10 and prevent a flame or spark, which is an ignition source, from contacting the air (oxygen). Also, when ignition of the battery module 10 intensifies, because the amount of gas in the battery module 10 rapidly increases, it may be more important to rapidly discharge a large amount of gas to the outside of the battery module 10 to reduce internal pressure.

The gas venting panel 300 according to the present disclosure may be configured to discharge gas stepwise when there is internal ignition of the battery module.

That is, when the amount of gas is small, the gas venting panel 300 according to the present disclosure may discharge gas while reducing introduction of air (oxygen) as much as possible by adjusting a width of a passage of the variable path section P2 to be relatively small as marked by F1 in FIG. 5, and when the amount of gas is large, the gas venting panel 300 may more rapidly discharge a large amount of gas to the outside of the battery module 10 by adjusting a width of a passage of the variable path section P2 to be greater than that when the amount of gas is small, as marked by F2 in FIG. 6, by using the passage width adjusting unit 330.

Hence, because the battery module 10 according to the first embodiment of the present disclosure includes the gas venting panel 300 configured and operating as described above, a width of the gas discharge path P may be variably increased or reduced according to the intensity of pressure of gas, thereby effectively discharging gas to the outside while reducing contact between air (oxygen) and an ignition source.

In the battery module 10 according to the first embodiment, two gas venting holes 215 are respectively provided in a side surface and the other side surface of the module case 200 in the longitudinal direction of the module case 200, and the gas venting panel 300 may cover each of the side surface and the other side surface of the module case 200.

However, it should be noted that the scope of the present disclosure is not limited to a case where the gas venting panel 300 is located on a side of the module case as in the battery module 10 of the first embodiment. For example, the gas venting panel 300 may be located over the module case 200.

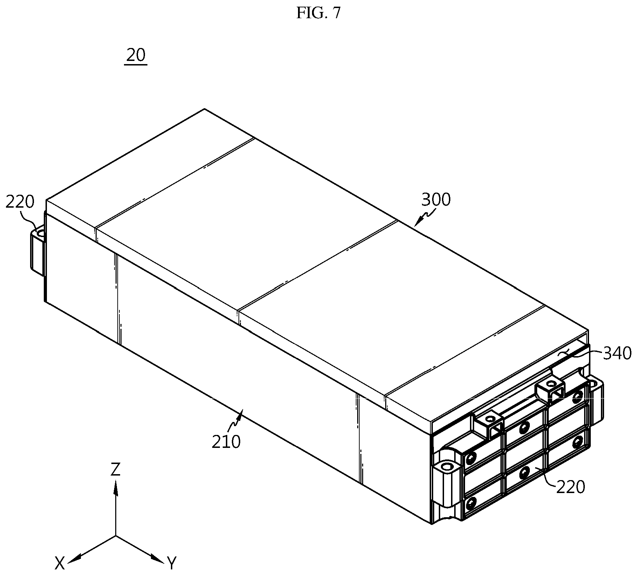

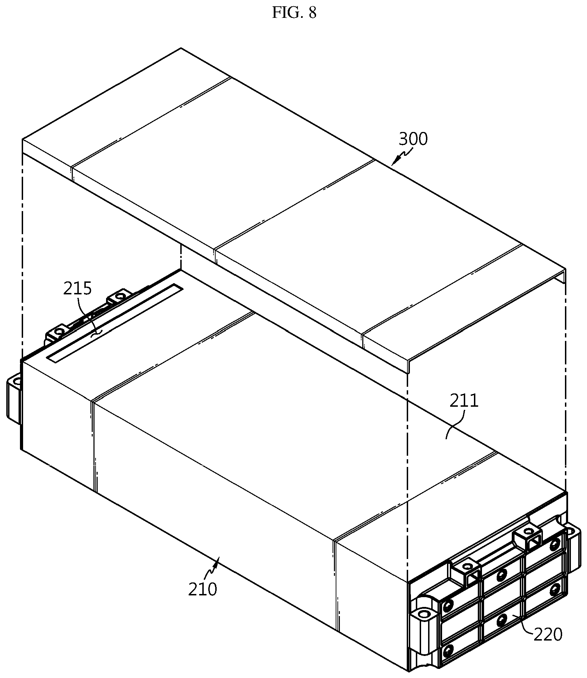

That is, as shown in an embodiment of FIGS. 7 and 8 that is a modified example of the battery module according to the first embodiment, the gas venting hole 215 may be applied to the upper plate 211 of the case body 210, and the gas venting panel 300 may be configured to communicate with the gas venting hole 215 and cover the upper plate 211 of the case body 210.

In this case, a battery module 20 having a lateral width less than that in the first embodiment may be provided. When multiple battery modules 20 are located in a battery pack (not shown), the battery modules 20 may be more space-efficiently arranged in a horizontal direction than the battery modules 10 according to the first embodiment.

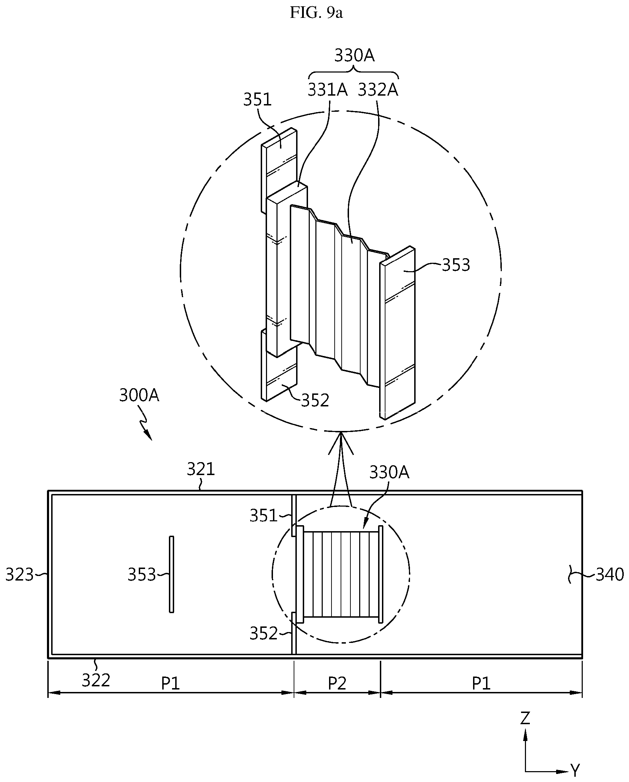

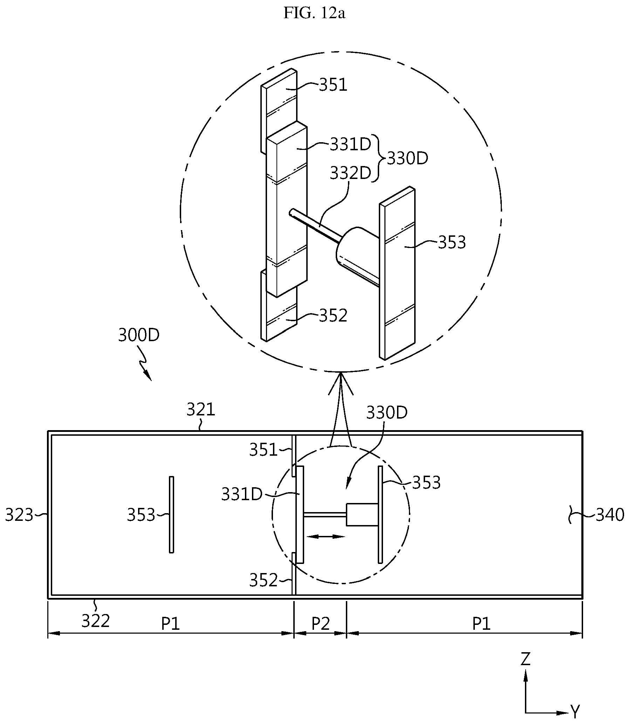

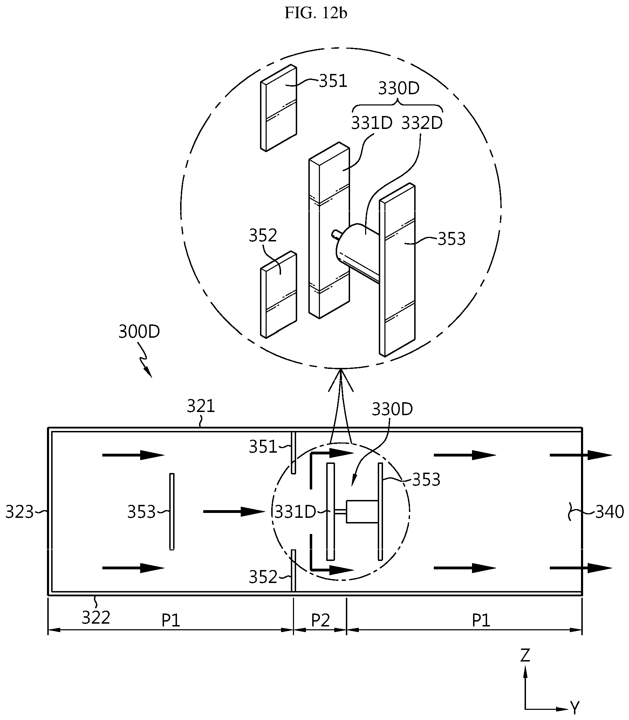

Next, the battery module 10 according to examples not representing the invention will be described with reference to FIGS. 9a to 11b. Later, the invention represented in FIGS. 12a and 12b will be described.

The same reference numerals as those in the above drawings denote the same members, a repeated description of the same members will be omitted, and a difference from the above embodiments will be mainly described.

The battery module according to FIGS. 9a to 11b is substantially the same as the battery module 10 according to the first embodiment, except for a structure of the gas discharge path P in the gas venting panel 300 and a configuration of the passage width adjusting unit 330.

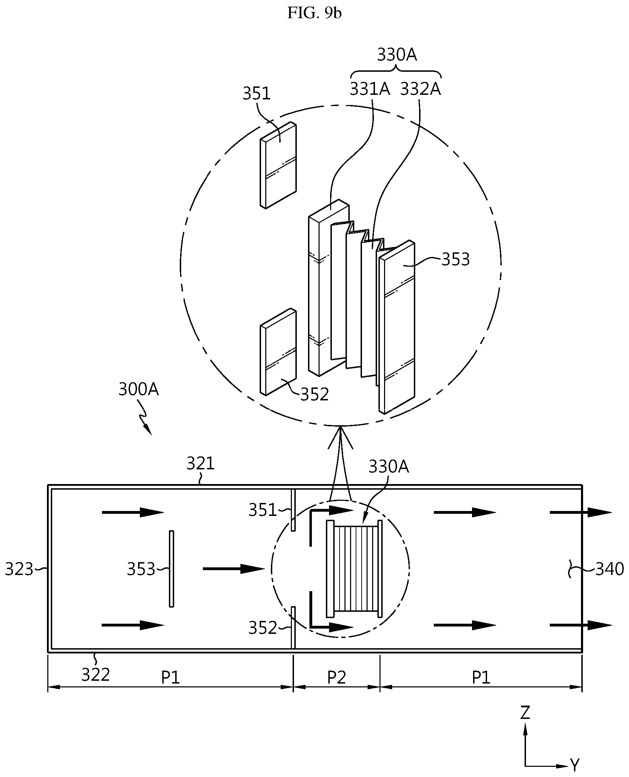

First, as shown in FIGS. 9a and 9b, a gas venting panel 300A of the battery module further includes a third protruding plate 353 that does not contact the first edge portion 321 and the second edge portion 322 and protrudes from a surface of the cover plate 310 to contact a surface of the module case 200. In this example not representing the invention, a position adjusting member 332A may be implemented as a leaf spring.

That is, as shown in an enlarged view of FIG. 9a, a passage width adjusting unit 330A includes a passage blocking member 331A and the position adjusting member 332A that is implemented as a leaf spring.

The passage width adjusting unit 330A may be configured so that, in a state where an elastic force of the leaf spring is applied in the -Y direction, a front edge portion of the passage blocking member 331A contacts the first protruding plate 351 and the second protruding plate 352 located on the same line in the Z direction to cause a passage between the first protruding plate 351 and the second protruding plate 352 to be closed by the passage blocking member 331A.

When there is internal ignition of the battery module and gas is introduced into the gas venting panel 300A, as shown in FIG. 9b, the position adjusting member 332A that is implemented as a leaf spring may be compressed by gas pressure, and thus, the passage blocking member 331A may move (in the +Y direction) to open a passage of the variable path section P2. In this case, like in the first embodiment, because the position adjusting member 332A that is a leaf spring is compressed in proportion to pressure of gas, a width of a passage may be variably increased or reduced according to the amount of gas.

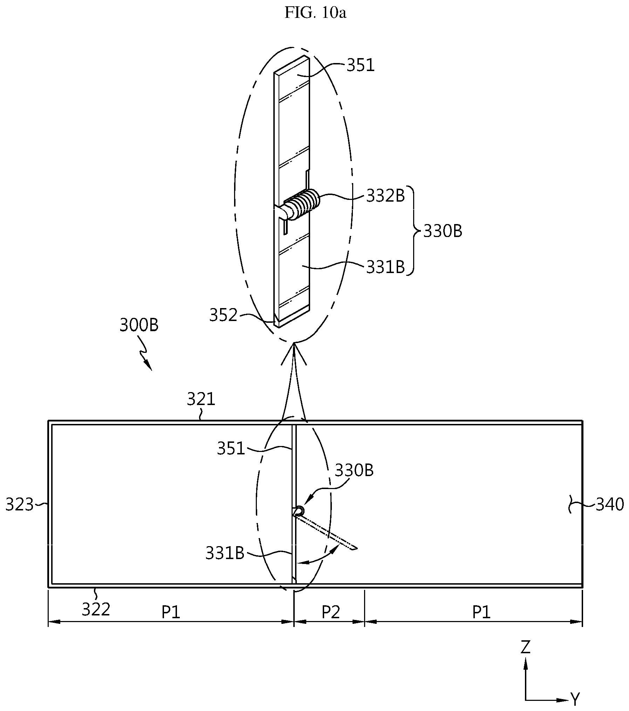

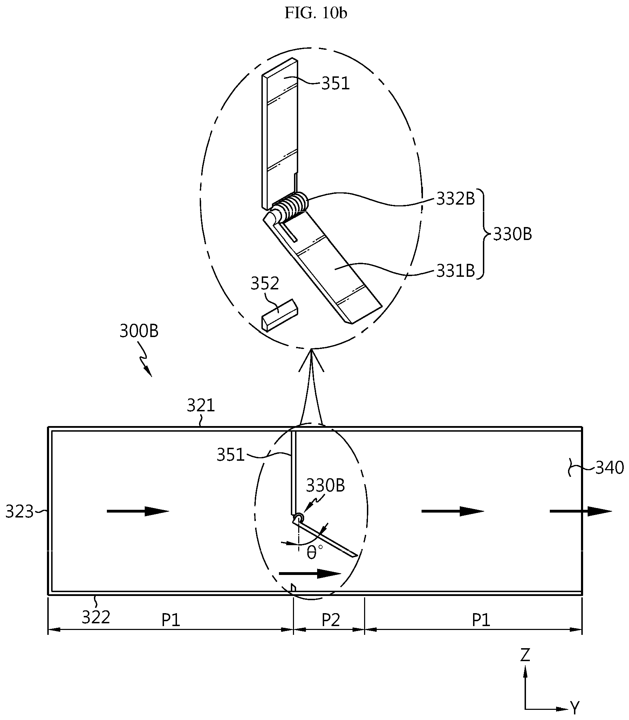

As shown in FIGS. 10a and 10b, a passage width adjusting unit 330B of a gas venting panel 300B includes a passage blocking member 331B and a position adjusting member 332B that is a torsion spring and rotates the passage blocking member 331B in proportion to gas pressure.

In this example not representing the invention, the number of first protruding plates 351 and second protruding plates 352 may be minimized to more smoothly discharge gas. That is, the first protruding plate 351 and the second protruding plate 352 are located on the same line in the Z direction and provided only at a closed point. The second protruding plate 352 may be formed to be similar to a stopper of the first embodiment.

As shown in FIG. 10a, the passage blocking member 331B may be rotatably coupled to an end of the first protruding plate 351 by a torsion spring. One arm of the torsion spring is fixedly coupled to the passage blocking member 331B and the other arm of the torsion spring is fixedly coupled to the first protruding plate 351, and in a state where an elastic force of the torsion spring is applied clockwise, an end of the passage blocking member 331B contacts the second protruding plate 352. Accordingly, a passage between the first protruding plate 351 and the second protruding plate 352 may be closed by the passage blocking member 331B, and when gas is generated, as shown in FIG. 10b, the passage blocking member 331B may rotate counterclockwise by a certain angle θ due to gas pressure to open a passage.

Because the torsion spring rotates in proportion to pressure of gas, a width of the passage may be variably increased or reduced according to the amount of gas.

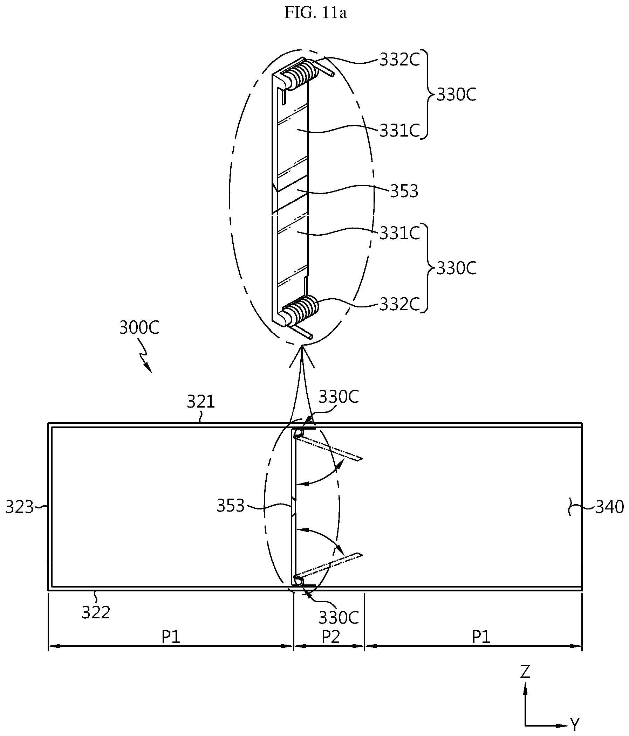

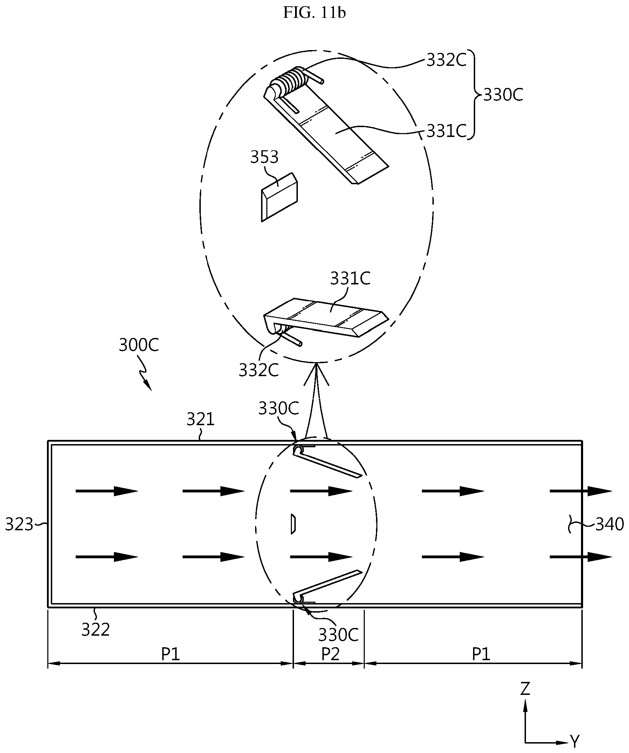

Referring to FIGS. 11a and 11b, a passage width adjusting unit 330C of another example not representing the invention includes a passage blocking member 331C and a position adjusting member 332C that is a torsion spring and rotates the passage blocking member 331C in proportion to gas pressure.

For example, in the gas venting panel 300C of the present example, the first protruding plate 351 and the second protruding plate 352 may be omitted, and the third protruding plate 353 functioning as a stopper may be provided. Two passage width adjusting units 330C may be provided. As shown in FIG. 11a, two passage blocking members 331C may contact the third protruding plate 353 with the third protruding plate 353 therebetween, and as shown in FIG. 11b, when gas is generated and gas pressure is applied, the two passage blocking members 331C may rotate to expand each passage.

Last, a passage width adjusting unit 330D of a gas venting panel 300D according to the invention includes a passage blocking member 331D and a position adjusting member 332D that is implemented as an actuator, as shown in FIGS. 12a and 12b. The actuator may be a hydraulic or pneumatic device including a cylinder fixed in the gas venting panel 300D and a piston rod connected to the passage blocking member 331D from the cylinder.

The gas venting panel 300D of this embodiment may include all of the first protruding plate 351, the second protruding plate 352, and the third protruding plate 353 therein.

As shown in FIG. 12a, the passage blocking member 331D may be located to close a passage between the first protruding plate 351 and the second protruding plate 352 located on the same line in the Z direction, the cylinder may be fixed to the third protruding plate 353 that is provided at a position spaced apart by a certain interval in the +Y direction from the first and second protruding plates 351, 352, and the passage blocking member 331D and the cylinder are connected by the piston rod that may linearly reciprocate with respect to the cylinder.

Hydraulic or pneumatic pressure of the actuator may be applied to the passage blocking member 331D in the -Y direction so that, at normal times, a passage between the first protruding plate 351 and the second protruding plate 352 is closed, and, as shown in FIG. 12b, when gas is generated, the piston rod moves in the +Y direction in proportion to gas pressure to variably expand the passage.

Because a width of a passage of the gas discharge path P is variably reduced or increased when there is internal ignition of the battery module, venting gas may be effectively discharged to the outside while reducing contact between air (oxygen) outside the battery module and an ignition source in the battery module.

A battery pack (not shown) according to the present disclosure may include one or more battery modules described above. The battery pack according to the present disclosure may further include a master battery management system (BMS) for integrally controlling charging and discharging of the one or more battery modules, a current sensor, a fuse, and a pack case for accommodating the above components.

The battery pack according to the present disclosure may be applied to an energy storage device, or may be applied to a vehicle such as an electric scooter, an electric vehicle, or a hybrid vehicle.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, left, right, front, and rear are used, these terms are only for convenience of explanation and may vary according to a position of a target object, a position of an observer, etc.

## Claims

1. A battery module (10) comprising:
a plurality of battery cells (111);
a module case (200) in which the plurality of battery cells (111) are accommodated, the module case (200) comprising a gas venting hole (215) on at least one side; and
a gas venting panel (300) comprising a gas discharge path (P) communicating with the gas venting hole (215) and configured to guide a flow of gas to an outside along a pre-determined path, the gas venting panel (300) being coupled to an outer side of the module case (200),
wherein the gas venting panel (300) comprises a passage width adjusting unit (330) configured to variably adjust a width of the gas discharge path (P) according to pressure of gas;
wherein the gas discharge path (P) comprises a fixed path section (P1) having a constant width and a variable path section (P2) having a width variably adjusted by the passage width adjusting unit (330);
wherein the passage width adjusting unit (330) comprises:
a passage blocking member (331) initially located at a closed point (C), which is a point in the variable path section (P2), and provided to close the variable path section (P2); and
a position adjusting member (332) configured to, when gas is generated, move the passage blocking member (331) away from the closed point (C) in a direction in which a width of a passage of the variable path section (P2) through which gas can flow is expanded in proportion to gas pressure;
**characterized in that** the position adjusting member (332C) comprises an actuator comprising: a cylinder fixed in the gas venting panel (300C); and a piston rod connected to the passage blocking member (331C) from the cylinder.

2. The battery module according to claim 1, wherein the passage width adjusting unit (330) is provided to close the variable path section (P2), and configured to, when gas is generated, open the variable path section (P2) in proportion to pressure of the gas to expand a passage.

3. The battery module according to claim 1, wherein the gas venting panel (300) comprises:
a cover plate (310) spaced apart at a predetermined interval from one surface of the module case (200) in which the gas venting hole (215) is located;
an edge portion (320) provided along a circumference of the cover plate (310) and surrounding a space between the one surface of the module case (200) and the cover plate (310),
wherein the gas discharge path (P) is provided in an inner space surrounded by the one surface of the module case (200), the cover plate (310), and the edge portion (320).

4. The battery module according to claim 3, wherein the edge portion (320) comprises:
a first edge portion (321) extending in a longitudinal direction of the module case (200);
a second edge portion (322) facing the first edge portion (321) and extending in the longitudinal direction of the module case (200); and
a third edge portion (323) extending to cross the first edge portion (321) and comprising both ends respectively connected to an end of the first edge portion (321) and an end of the second edge portion (322),
wherein an end of the gas venting panel (300) facing the third edge portion (323) is open so that gas is ejected to an outside.

5. The battery module according to claim 4, wherein the gas venting panel (300) comprises:
a first protruding plate (351) having a length shorter than a straight line distance between the first edge portion (321) and the second edge portion (322) and protruding from the first edge portion (321) toward the second edge portion (322); and
a second protruding plate (352) protruding from the second edge portion (322) toward the first edge portion (321).

6. The battery module according to claim 5, wherein the first protruding plate (351) is plural, the plurality of the first protruding plate are spaced at a certain interval in a longitudinal direction of the gas venting panel (300), and
the second protruding plate (352) is plural, the plurality of the second protruding plate are spaced at a certain interval in the longitudinal direction of the gas venting panel (300), and are alternately arranged with the plurality of first protruding plates.

7. The battery module according to claim 4, wherein the gas venting panel (300) comprises a third protruding plate (353) not contacting the first edge portion (321) and the second edge portion (322) and protruding from a surface of the cover plate (310) to contact a surface of the module case (200).

8. The battery module according to claim 1, wherein the module case (200) comprises two gas venting holes (215) respectively provided in one side surface and the other side surface in a longitudinal direction,
wherein two gas venting panels (215) are provided to respectively cover the one side surface and the other side surface of the module case (200).

9. The battery module according to claim 1, wherein the module case (200) comprises a gas venting hole (215) formed in an upper portion thereof,
wherein the gas venting panel (300) is provided to cover the upper portion of the module case (200).

10. A battery pack comprising the battery module according to any one of claims 1 to 9.

## Patentansprüche

1. Batteriemodul (10), umfassend:
eine Mehrzahl von Batteriezellen (111);
ein Modulgehäuse (200), in welchem die Mehrzahl von Batteriezellen (111) aufgenommen sind, wobei das Modulgehäuse (200) ein Gasentlüftungsloch (215) an wenigstens einer Seite umfasst; und
ein Gasentlüftungspaneel (300), welches einen Gasabführpfad (P) umfasst, welcher mit dem Gasentlüftungsloch (215) kommuniziert und dazu eingerichtet ist, einen Strom von Gas an ein Äußeres entlang eines vorbestimmten Pfads zu führen, wobei das Gasentlüftungspaneel (300) mit einer äußeren Seite des Modulgehäuses (200) gekoppelt ist,
wobei das Gasentlüftungspaneel (300) eine Durchgangsbreite-Anpassungseinheit (330) umfasst, welche dazu eingerichtet ist, eine Breite des Gasabführpfads (P) gemäß einem Druck von Gas variabel anzupassen;
wobei der Gasabführpfad (P) einen festen Pfadbereich (P1), welcher eine konstante Breite aufweist, und einen variablen Pfadbereich (P2) umfasst, welcher eine Breite aufweist, welche durch die Durchgangsbreite-Anpassungseinheit (330) variabel angepasst wird;
wobei die Durchgangsbreite-Anpassungseinheit (330) umfasst:
ein Durchgangsblockierungselement (331), welches sich initial an einem geschlossenen Punkt (C) befindet, welcher ein Punkt in dem variablen Pfadbereich (P2) ist, und bereitgestellt ist, um den variablen Pfadbereich (P2) zu verschließen; und
ein Positionsanpassungselement (332), welches dazu eingerichtet ist, wenn Gas generiert wird, das Durchgangsblockierungselement (331) von dem geschlossenen Punkt (C) in eine Richtung weg zu bewegen, in welcher eine Breite eines Durchgangs des variablen Pfadbereichs (P2), durch welches Gas strömen kann, in Proportion zu einem Gasdruck expandiert ist;
**dadurch gekennzeichnet, dass** das Positionsanpassungselement (332C) einen Aktuator umfasst, welcher umfasst: einen Zylinder, welcher in dem Gasentlüftungspaneel (300C) befestigt ist; und eine Kolbenstange, welche von dem Zylinder mit dem Durchgangsblockierungselement (331C) verbunden ist.

2. Batteriemodul nach Anspruch 1, wobei die Durchgangsbreite-Anpassungseinheit (330) bereitgestellt ist, um den variablen Pfadbereich (P2) zu verschließen, und dazu eingerichtet ist, wenn Gas generiert wird, den variablen Pfadbereich (P2) in Proportion zu einem Druck des Gases zu öffnen, um einen Durchgang zu expandieren.

3. Batteriemodul nach Anspruch 1, wobei das Gasentlüftungspaneel (300), umfasst:
eine Abdeckplatte (310), welche in einem vorbestimmten Intervall von einer Fläche des Modulgehäuses (200) beabstandet ist, in welcher sich das Gasentlüftungsloch (215) befindet;
einen Randabschnitt (320), welcher entlang eines Umfangs der Abdeckplatte (310) bereitgestellt ist und einen Raum zwischen der einen Fläche des Modulgehäuses (200) und der Abdeckplatte (310) umgibt,
wobei der Gasabführpfad (P) in einem inneren Raum bereitgestellt ist, welcher durch die eine Fläche des Modulgehäuses (200), die Abdeckplatte (310) und den Randabschnitt (320) umgeben ist.

4. Batteriemodul nach Anspruch 3, wobei der Randabschnitt (320) umfasst:
einen ersten Randabschnitt (321), welcher sich in einer longitudinalen Richtung des Modulgehäuses (200) erstreckt;
einen zweiten Randabschnitt (322), welcher dem ersten Randabschnitt (321) zugewandt ist und sich in der longitudinalen Richtung des Modulgehäuses (200) erstreckt; und
einen dritten Randabschnitt (323), welcher sich erstreckt, um den ersten Randabschnitt (321) zu kreuzen, und beide Enden umfasst, welche jeweils mit einem Ende des ersten Randabschnitts (321) und einem Ende des zweiten Randabschnitts (322) verbunden sind,
wobei ein Ende des Gasentlüftungspaneels (300), welches dem dritten Randabschnitt (323) zugewandt ist, offen ist, so dass Gas zu einem Äußeren entlassen wird.

5. Batteriemodul nach Anspruch 4, wobei das Gasentlüftungspaneel (300) umfasst:
eine erste vorstehende Platte (351), welche eine Länge aufweist, welche kürzer als ein geradliniger Abstand zwischen dem ersten Randabschnitt (321) und dem zweiten Randabschnitt (322) ist und von dem ersten Randabschnitt (321) in Richtung des zweiten Randabschnitts (322) vorsteht, und
eine zweite vorstehende Platte (352), welche von dem zweiten Randabschnitt (322) in Richtung des ersten Randabschnitts (321) vorsteht.

6. Batteriemodul nach Anspruch 5, wobei die erste vorstehende Platte (351) mehrfach ist, wobei die Mehrzahl von ersten vorstehenden Platten in einem bestimmten Intervall in einer longitudinalen Richtung des Gasentlüftungspaneels (300) beabstandet sind, und
wobei die zweite vorstehende Platte (352) mehrfach ist, wobei die Mehrzahl von zweiten vorstehenden Platten in einem bestimmten Intervall in der longitudinalen Richtung des Gasentlüftungspaneels (300) beabstandet sind und alternierend mit der Mehrzahl von ersten vorstehenden Platten angeordnet sind.

7. Batteriemodul nach Anspruch 4, wobei das Gasentlüftungspaneel (300) eine dritte vorstehende Platte (353) umfasst, welche nicht den ersten Randabschnitt (321) und den zweiten Randabschnitt (322) kontaktiert, und von einer Fläche der Abdeckplatte (310) vorsteht, um eine Fläche des Modulgehäuses (200) zu kontaktieren.

8. Batteriemodul nach Anspruch 1, wobei das Modulgehäuse (200) zwei Gasentlüftungslöcher (215) umfasst, welche jeweils in einer Seitenfläche und der anderen Seitenfläche in einer longitudinalen Richtung bereitgestellt sind,
wobei zwei Gasentlüftungspaneele (215) bereitgestellt sind, um die eine Seitenfläche und die andere Seitenfläche des Modulgehäuses (200) jeweils abzudecken.

9. Batteriemodul nach Anspruch 1, wobei das Modulgehäuse (200) ein Gasentlüftungsloch (215) umfasst, welches in einem oberen Abschnitt davon gebildet ist,
wobei das Gasentlüftungspaneel (300) bereitgestellt ist, um den oberen Abschnitt des Modulgehäuses (200) abzudecken.

10. Batteriepack, umfassend das Batteriemodul nach einem der Ansprüche 1 bis 9.

## Revendications

1. Module de batterie (10) comprenant :
une pluralité d'éléments de batterie (111) ;
un boîtier de module (200) dans lequel la pluralité d'éléments de batterie (111) sont logés, le boîtier de module (200) comprenant un trou de ventilation de gaz (215) sur au moins un côté ; et
un panneau de ventilation de gaz (300) comprenant un trajet de décharge de gaz (P) communiquant avec le trou de ventilation de gaz (215) et configuré pour guider un écoulement de gaz vers l'extérieur le long d'un trajet prédéterminé, le panneau de ventilation de gaz (300) étant couplé à un côté externe du boîtier de module (200),
dans lequel le panneau de ventilation de gaz (300) comprend une unité de réglage de largeur de passage (330) configurée pour régler de manière variable une largeur du trajet de décharge de gaz (P) en fonction de la pression de gaz ;
dans lequel le trajet de décharge de gaz (P) comprend une section de trajet fixe (P1) ayant une largeur constante et une section de trajet variable (P2) ayant une largeur réglable de manière variable par l'unité de réglage de largeur de passage (330) ;
dans lequel l'unité de réglage de largeur de passage (330) comprend :
un organe de blocage de passage (331) initialement situé au niveau d'un point fermé (C), qui est un point dans la section de trajet variable (P2), et prévu pour fermer la section de trajet variable (P2) ; et
un organe de réglage de position (332) configuré pour, lorsque du gaz est généré, éloigner l'organe de blocage de passage (331) du point fermé (C) dans une direction dans laquelle une largeur d'un passage de la section de trajet variable (P2) à travers laquelle du gaz peut s'écouler est étendue proportionnellement à la pression de gaz ;
**caractérisé en ce que** l'organe de réglage de position (332C) comprend un actionneur comprenant : un cylindre fixé dans le panneau de ventilation de gaz (300C) ; et une tige de piston reliée à l'organe de blocage de passage (331C) à partir du cylindre.

2. Module de batterie selon la revendication 1, dans lequel l'unité de réglage de largeur de passage (330) est prévue pour fermer la section de trajet variable (P2), et configurée pour, lorsque du gaz est généré, ouvrir la section de trajet variable (P2) proportionnellement à la pression du gaz pour étendre un passage.

3. Module de batterie selon la revendication 1, dans lequel le panneau de ventilation de gaz (300) comprend :
une plaque de recouvrement (310) espacée à un intervalle prédéterminé d'une surface du boîtier de module (200) dans laquelle le trou de ventilation de gaz (215) est situé ;
une partie de bord (320) prévue le long d'une circonférence de la plaque de recouvrement (310) et entourant un espace entre une surface du boîtier de module (200) et la plaque de recouvrement (310),
dans lequel le trajet de décharge de gaz (P) est prévu dans un espace interne entouré par l'une surface du boîtier de module (200), la plaque de recouvrement (310) et la partie de bord (320).

4. Module de batterie selon la revendication 3, dans lequel la partie de bord (320) comprend :
une première partie de bord (321) s'étendant dans une direction longitudinale du boîtier de module (200) ;
une deuxième partie de bord (322) faisant face à la première partie de bord (321) et s'étendant dans la direction longitudinale du boîtier de module (200) ; et
une troisième partie de bord (323) s'étendant pour traverser la première partie de bord (321) et comprenant les deux extrémités respectivement reliées à une extrémité de la première partie de bord (321) et à une extrémité de la deuxième partie de bord (322),
dans lequel une extrémité du panneau de ventilation de gaz (300) faisant face à la troisième partie de bord (323) est ouverte de sorte que du gaz est éjecté vers l'extérieur.

5. Module de batterie selon la revendication 4, dans lequel le panneau de ventilation de gaz (300) comprend :
une première plaque saillante (351) ayant une longueur plus courte qu'une distance en ligne droite entre la première partie de bord (321) et la deuxième partie de bord (322) et faisant saillie à partir de la première partie de bord (321) vers la deuxième partie de bord (322) ; et
une deuxième plaque saillante (352) faisant saillie à partir de la deuxième partie de bord (322) vers la première partie de bord (321).

6. Module de batterie selon la revendication 5, dans lequel la première plaque saillante (351) est plurielle, la pluralité de la première plaque saillante est espacée à un certain intervalle dans une direction longitudinale du panneau de ventilation de gaz (300), et la deuxième plaque saillante (352) est plurielle, la pluralité de la deuxième plaque saillante sont espacées à un certain intervalle dans la direction longitudinale du panneau de ventilation de gaz (300), et sont agencées en alternance avec la pluralité de premières plaques saillantes.

7. Module de batterie selon la revendication 4, dans lequel le panneau de ventilation de gaz (300) comprend une troisième plaque saillante (353) n'entrant pas contact avec la première partie de bord (321) et la deuxième partie de bord (322) et faisant saillie à partir d'une surface de la plaque de recouvrement (310) pour entrer en contact avec une surface du boîtier de module (200).

8. Module de batterie selon la revendication 1, dans lequel le boîtier de module (200) comprend deux trous de ventilation de gaz (215) respectivement prévus dans une surface latérale et l'autre surface latérale dans une direction longitudinale,
dans lequel deux panneaux de ventilation de gaz (215) sont prévus pour recouvrir respectivement l'une des surfaces latérales et l'autre surface latérale du boîtier de module (200).

9. Module de batterie selon la revendication 1, dans lequel le boîtier de module (200) comprend un trou de ventilation de gaz (215) formé dans une partie supérieure de celui-ci,
dans lequel le panneau de ventilation de gaz (300) est prévu pour recouvrir la partie supérieure du boîtier de module (200).

10. Bloc-batterie comprenant le module de batterie selon l'une quelconque des revendications 1 à 9.
